# EUROPEAN PATENT SPECIFICATION

(11) **EP 3 341 639 B1**
(45) Date of publication and mention of the grant of the patent: **21.10.2020**
(21) Application number: 16756684.3
(22) Date of filing: 23.08.2016
(51) Int. Cl.: F16L 3/22, F16L 3/237, B67D 7/38, F16L 3/08

(54) **CLAMP DEVICE**
SPANNVORRICHTUNG
DISPOSITIF DE SERRAGE

(30) Priority: 25.08.2015 SE 1551100
(43) Date of publication of application: 04.07.2018
(73) Proprietor: Wayne Fueling Systems Sweden AB, 202 15 Malmö (SE)
(72) Inventor: LARSSON, Bengt I., 274 53 Skivarp (SE); LARSSON, Germund, 224 64 Lund (SE); MÅRTENSSON, Mattias, 244 33 Kävlinge (SE); WEMMERT, Marlene, 246 34 Löddeköpinge (SE)
(74) Representative: AWA Sweden AB
(86) International application number: PCT/EP2016/069869
(87) International publication number: WO 2017/032764

(56) References cited:
- WO-A1-2011/146060
- DE-U1- 8 802 421
- GB-A- 1 397 575
- US-A- 4 793 578

## Description

### FIELD OF THE INVENTION

The present invention relates generally to methods and devices for securing elongate items, such as wires, cables, hoses, tubing, conduits etc. More particularly, the invention relates to a clamp device for clamping and locking at least two elongated components in a spaced interlocked position to each other.

### BACKGROUND

The document DE 88 024 21 U discloses a clamp device with a first section and a second section for receiving a first elongate component and a second elongate component.

Although devices effective in securing elongate items to each other have been presented within prior art, current devices do not allow elongated items in any other interlocked configuration other than in a parallel configuration.

By way of example, a hydraulics cabinet in a fuel dispenser for dispensing fuel to a vehicle often contains several pipes running in various directions and positioned at various distances relative to one another. It can be difficult to maintain each pipe in a desired position within the cabinet, and adjacent pipes often contact one another. During use, the pipes can vibrate and wear can occur between the pipes. This could potentially cause damage to the pipes and result in leakage of fuel. Current solutions include clamps for connecting two parallel types together. However, these clamps cannot be used with pipes that do not run parallel to one another. Moreover, such clamps are only configured to maintain pipes at a specific distance.

Accordingly, there remains a need for improved methods and devices for clamping two structures.

### SUMMARY

An object of the invention is to provide a clamp device enabling freely selected angulated interlocked position for the elongated items while still providing a fixed distance in between the elongated items to avoid vibration, chaffing, heat transfer or other adverse consequences of insufficient spacing between the elongated items.

Another object of the invention is to provide a clamp device enabling two different distances between the elongated items using one and the same clamping device.

According to a first aspect of the invention, these and other objects are achieved, in full or at least in part, by a clamp device according to claim 1.

According to one embodiment, said first and second bases have coupling structures configured to rotatably assemble to one another to allow rotation of first and second elongated components within parallel planes of motion.

According to one embodiment, said first base and said first receiver is integrally formed, such as a one-unit piece.

According to one embodiment, said second base and said second receiver is integrally formed, such as one-unit piece.

According to one embodiment, at least one of said first and second section is configured to provide at least two different distances between said first and said second elongate components in said interlocked position.

According to another embodiment, said receivers have a C-shaped configuration to receive and clamp said at least first and second elongated components.

According to a further embodiment, said first base has a sleeve member arranged axially perpendicular from said first receiver and off center from said first receiver, thereby providing two different distances between said first receiver and said second receiver when said first base is assembled to said second base in the two different assembling possibilities for said first and said second section.

According to one embodiment, said first base has a sleeve member arranged axially perpendicular and tangential from said first receiver, preferably off center from said first receiver.

According to one embodiment, said second base has a shaft member arranged axially perpendicular from said second receiver.

According to another embodiment, said second base has a shaft member arranged axially perpendicular and tangential from said second receiver and off center from said second receiver.

According to an additional embodiment, said first and said second base has a locking arrangement for locking said first and second section together after assembling.

According to a further embodiment, said locking arrangement comprises a friction based locking arrangement. In one embodiment said locking arrangement comprises a conical shaped shaft member on said second base for inserting in a sleeve member on said first base.

Said locking arrangement comprises a protrusion arranged on a shaft member on said second base and a corresponding recess in a sleeve member on said first base for receiving said protrusion when assembling and coupling said first and said second section.

According to one embodiment, said locking arrangement comprises at least one riffled or fluted surface for friction engagement between surfaces of said coupling structures of said first and second bases.

According to a second aspect, these and other objects are also achieved, in full or at least in part, by a fuel dispenser comprising: a hydraulics compartment having fuel dispensing components extending therethrough, the hydraulics compartment having at least two tubes extending therethrough, and the hydraulics compartment having a clamping device according any of the above disclosed embodiments, wherein a first portion of the clamping device is coupled to the first tube and a second portion of the clamping device is coupled to the second tube.In another embodiment, a clamping device is provided and includes first and second portions, with each portion being configured to engage a tubular structure such that the first and second portions can maintain the tubular structures in a fixed position relative to one another. The clamping device can be selectively matable in a plurality of configurations such that the first and second portions can maintain the first and second tubular structures in a parallel orientation relative to one another, a non-parallel orientation relative to one another, and at at least two different distances relative to one another.

The first and second portions can mate to one another using a variety of techniques. For example, the first and second portions can be rotatably matable relative to one another to allow the first and second portions to selectively maintain first and second elongate structures in one of the parallel and non-parallel orientations. In other aspects, the second portion can be insertable into the first portion in a first direction to maintain first and second elongate structures at a first distance apart, and the second portion can be insertable into the first portion in a second direction to maintain first and second elongate structures at a second distance apart that differs from the first distance. In another embodiment, the second portion can be insertable into a first bore in the first portion to maintain first and second elongate structures at a first distance apart, and the second portion can be insertable into a second bore in the first portion to maintain first and second elongate structures at a second distance apart that differs from the first distance.

The clamping device can also include other features. For example, at least one of the first and second portions can include a locking element for locking the first and second portions together.

In yet another embodiment, a clamping device is provided and includes a first member having a receiver portion configured to receive and clamp a first tube, and having a first mating portion. The clamping device also include a second member having a receiver portion configured to receive and clamp a second tube, and having a second mating portion that is configured to mate with the first mating portion to hold first and second tubes in a fixed position relative to one another. The second mating portion can be insertable into the first mating portion in a first direction in which first and tubes are held at a first distance, and the second mating portion can be insertable into the first mating portion in a second direction in which first and second tubes are held at a second distance that is greater than the first distance.

In one embodiment, the first and second mating portions can be rotatably matable such that a radial position of the receiver portion of each of the first and second members about a longitudinal axis of the first mating portion is adjustable. By way of non-limiting example, the second mating portion can be a male member and the first mating portion can be a female member. The second mating portion can be in the form of an elongate shaft and the first mating portion can include a lumen configured to receive the elongate shaft. In one embodiment, an inner diameter of the lumen is expandable and compressible. In other embodiments, the elongate shaft can include a protrusion formed on a terminal end thereof and configured to engage the first mating portion so as to lock the second mating portion to the first mating portion. In other aspects, the second mating portion can be held by a friction fit within the first mating portion.

In another embodiment, the first receiver portion can have a central longitudinal axis along which a first tube is configured to extend when mated thereto, and the first mating portion can have a lumen extending therethrough along an axis that is substantially perpendicular to the central longitudinal axis. The second receiver portion can have a central longitudinal axis along which a second tube is configured to extend when mated thereto, and the second mating portion can extend along an axis that is substantially perpendicular to a central longitudinal axis.

In another embodiment, a fuel dispenser is provided and includes a hydraulics compartment having fuel dispensing components extending therethrough. The hydraulics compartment can have at least two tubes extending therethrough, and the hydraulics compartment can have a clamping device disposed therein. A first portion of the clamping device can be coupled to the first tube and a second portion of the clamping device can be coupled to the second tube. The first and second portions of the clamping device can be selectively matable to one another in a plurality of configurations to maintain the first and second tubes at a plurality of angular orientations relative to one another and at a plurality of distances from one another

In one embodiment, the clamping device can have a first configuration in which the first and second portions maintain the first and second tubes at a first distance, and the clamping device can have a second configuration in which the first and second portions maintain the first and second tubes at a second distance that is greater than the first distance.

In another embodiment, the clamping device can have a first configuration in which the first and second portions maintain the first and second tubes in a parallel configuration, and the clamping device have a second configuration in which the first and second portions maintain the first and second tubes in a non-parallel configuration.

The fuel dispenser can also include a second clamping device coupled to a third tube and a fourth tube disposed within the hydraulics compartment for selectively maintaining the third and fourth tubes at one of a plurality of angular orientations relative to one another, and for selectively maintaining the third and fourth tubes at one of a plurality of distances from one another.

Other objectives, features and advantages of the present invention will appear from the following detailed disclosure, from the attached claims, as well as from the drawings. It is noted that the invention relates to all possible combinations of features.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

As used herein, the term "comprising" and variations of that term are not intended to exclude other additives, components, integers or steps.

### BRIEF DESCRIPTION OF THE DRAWINGS

The invention will be described in more detail with reference to the appended schematic drawings, which show an example of a presently preferred embodiment of the invention.
Fig. 1 is a perspective view of a clamp device according to one embodiment with the first and second section separated.
Fig. 2a is a perspective view of the clamp device assembled in the direction as positioned in Fig. 1.
Fig. 2b is a front view of the clamp device as assembled in Fig. 2a with clamped pipes.
Fig. 2c is a backside view of the clamp device with clamped pipes as shown in Fig. 2b.
Fig. 3a is a perspective view of the clamp device as assembled in Fig. 2a, but with one section rotated about 90° from the position in Fig. 2a.
Fig. 3b is a perspective view of the clamp device of like the one in Fig. 2a with clamped pipes, but with one section rotated about 90 °.
Fig. 4 is a perspective view of the clamp device of Fig. 2a, but with one section rotated about 180 °.
Fig. 5 is a perspective view of a clamp device of Fig. 1, but with one section turned to be assembled from the other side of said section with the other section.
Fig. 6a is perspective view of the clamp device assembled in the direction as positioned in Fig. 5.
Fig. 6b is a front view of the clamp device as assembled in Fig. 6a with clamped pipes.
Fig. 7a is a perspective view of the clamp device as assembled in Fig. 6a, but with one section rotated about 120° from the position in Fig. 6a.
Fig. 7b is a perspective view of the clamp device of Fig. 7a with clamped pipes.
Fig. 8 is a cross-sectional view of a clamp device according to another embodiment.
Fig. 9 is a perspective view of a fuel dispenser.

It is noted that the drawings are not necessarily to scale. The drawings are intended to depict only typical aspects of the subject matter disclosed herein, and therefore should not be considered as limiting the scope of the disclosure. In the drawings, like numbering represent like elements between the drawings.

### DETAILED DESCRIPTION

The present invention will now be described more fully hereinafter with reference to the accompanying drawings, in which currently a preferred embodiment of the invention is shown. The present invention may, however, be embodied in many different forms and should not be construed as limited to the embodiments set forth herein; rather, these embodiments are provided for thoroughness and completeness, and to fully convey the scope of the invention to the skilled addressee. Like reference characters refer to like elements throughout.

Various methods and devices are provided for maintaining two structures in a desired spatial relationship relative to one another. In particular, a clamping device is provided having first and second clamping members that are matable to one another in several configurations so as to allow the clamping device to couple between two structures that extend at various angular orientations relative to one another. For example, in one configuration the clamping device can couple between two tubular structures that extend in a parallel orientation relative to one another. In another configuration, the clamping device can couple between two tubular structures that extend in a nonparallel configuration relative to one another. The clamping device can also selectively maintain the parallel and non-parallel structures at various distances from one another.

While the clamping device has applicability in various applications, in one exemplary embodiment the clamping device is particularly suitable for use in a fuel dispenser. The hydraulics cabinet of a fuel dispenser often contains several tubes/pipes extending therethrough for the delivery of fuel or other fluids. These tubes can contact one another at various locations, and such contact can cause wear which can result in potential damage or leakage. The clamping devices disclosed herein can be used to maintain two tubular structures at a fixed distance from one another so as to prevent contact between the structures. The modularity of the clamping device allows a single clamping device to connect in various orientations so as to accommodate elongate structures extending at various angles relative to one another and at various distances from one another.

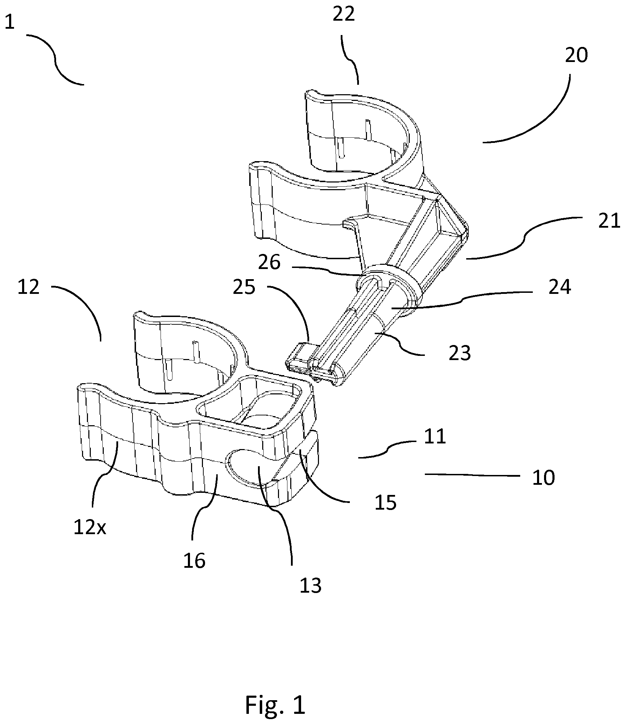

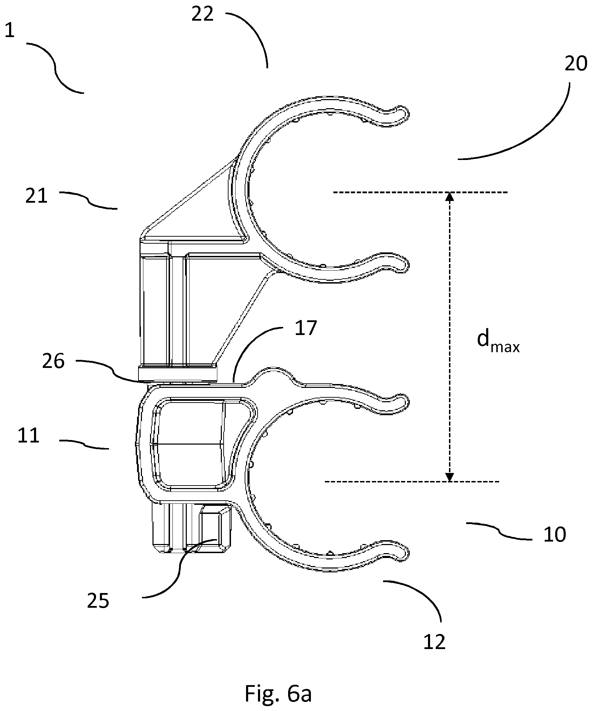

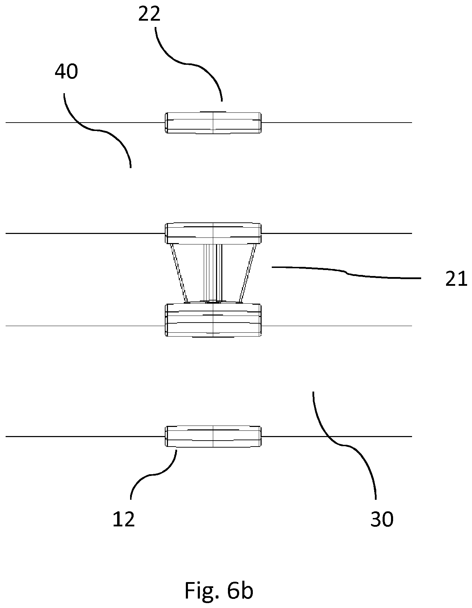

Figs. 1-7 show a clamp device 1 according to one embodiment. The illustrated clamp device 1 has a first section 10 and a second section 20. The first and second sections 10, 20 are matable to one another in various configurations so as to maintain first and second structures at a desired orientation relative to one another.

The first section 10, e.g. a first clamping member, has a first receiver 12 which is configured to receive and clamp a first pipe 30, and a first base 11 for meeting with the second section 20. In the embodiment shown in the figures the first receiver 12 has a C-shaped configuration for receiving and clamping a first pipe 30. The C-shaped configuration defines a central longitudinal axis extending therethrough along which a first pipe will extend. While the illustrated receiver has a C-shaped configuration, other forms are also possible as long as it may receive and clamp an elongated component 30, 40, such as a pipe. In one embodiment the receiver is manufactured in a material that will provide a resilient snap fit with the elongated component. The first section may in one embodiment optionally have more than one receiver, such as two, three or more receivers arranged in parallel positions to one another (not shown), all being connected and arranged with the first base 11.

As indicated above, the first base 11 can be in the form of a mating element for mating with the second section 20. The illustrated first base 11 is in the form of a female housing having a bore or sleeve member 13 extending therethrough. The first base 11 is formed on the back side of the C-shaped receiver 12, such that a pipe seated in the receiver will be positioned on one side of the first section and the sleeve member 13 is positioned on an opposite side of the first section. As further shown in Fig. 1, the sleeve member 13 is arranged such that its longitudinal axis extends substantially perpendicular to the longitudinal axis of C-shaped first receiver 12. Moreover, the illustrated sleeve member 13 is offset relative to the first receiver 12. In particular, as shown in Fig. 1 an outer wall 16 is substantially aligned along a plane with an outer wall 12x of the first receiver 12, whereas the opposite outer wall of the base 11 is offset and out-of-plane relative to the outer wall of the first receiver 12 that is opposite to outer wall 12x.

The second section 20 has a second base 21 and a second receiver 22, which second receiver 22 is configured to receive and clamp a second pipe 40. In the embodiment shown in the figures the second receiver 22 has a C-shaped configuration similar to that of the first receiver 11. However, as stated above, other forms are possible and different forms for the first and second receiver are also possible, as long as each receiver may receive and clamp an elongated component 30, 40, such as a pipe. Again, the receiver is, in one embodiment, manufactured in a material allowing resilient snap fit with the elongated component. The second section 20 may also, similar to the first section 10, have more than one receiver, such as two, three or more receivers arranged in parallel positions to one another (not shown), all being connected and arranged with the second base 21.

The illustrated second base 21 is in the form of a male mating member that is configured to slidably mate with the sleeve 13 in the first base 11. As shown, the second base 21 includes a shaft member 23 having a longitudinal axis that extends perpendicular to a central longitudinal axis of a pipe seated in the second receiver.

The sleeve member 13 is arranged to receive the shaft member 23 such that the first and second sections 10, 20 can rotate relative to one another. Such a configuration allows the first and second receivers 12, 22 to be radially aligned with one another, or to be radially offset from one another. In an exemplary embodiment, the first and second sections 10, 20 can freely rotate 360 degrees relative to one another, and rotation can occur without causing any contact between the tubes seated in the receivers 12, 22. For example, the tubes 30, 40 seated in the receivers 12, 22 can rotate within parallel planes relative to one another.

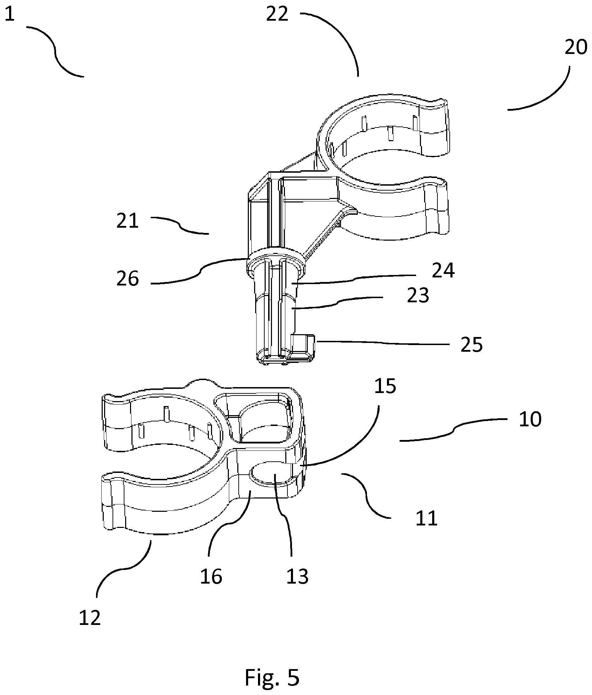

In the illustrated embodiment, as indicated above the sleeve member 13 on the first portion is arranged off center from the first receiver 12. With such an arrangement the first section 10 provides for two different distances, dₘᵢₙ, dₘₐₓ, between the first and second receivers 12, 22, depending on in which direction the first section 10 is joined and assembled with the second section 20. For example, when the first section 10 is inserted into a first open end of the sleeve 13, as positioned and assembled in Fig. 1 - 4, a shorter fixed interlocked position, dₘᵢₙ, is provided between the two elongated components 30, 40. Conversely, when the first section 10 is inserted into a second, opposite open end of the sleeve 13, as positioned and assembled in Fig. 5 - 7, a longer fixed interlocked position, dₘₐₓ, is provide between the two elongated components 30, 40.

In the illustrated embodiment, the shaft member 23 is also arranged off center from the second receiver 22, which adds to the specific distance dₘᵢₙ, dₘₐₓ between the first and second elongated members 30, 40. In particular, a first end of the shaft member 23 is connected to the second receiver 22 at a location that is offset from a mid-point of the second receiver 22.

Further, the shaft member 23 may have a stop seat 26 arranged to engage a front edge surface 17 of the sleeve member 13 when the shaft member 23 has been inserted fully or to a predetermined extent into the sleeve member 13. The stop seat 26 is in the form of a flange and it is positioned at a location that is a distance apart from an outer sidewall of the second receiver 22 to facilitate the offset mating arrangement between the first and second portions of the clamping device. Other alternatives, limiting to what extent the shaft member 23 may be inserted into the sleeve member 13, are also possible.

The illustrated embodiment further has a locking arrangement for locking the first section 10 and the second section 20 at a desired orientation relative to one another after assembling. Such a locking arrangement may be provided by a friction fit between the sleeve member 13 and the shaft member 23. Having a friction fit provides a continuous system which may compensate for any deviations or pipe movements. One example of such a friction fit may be provided by a conical shaped shaft member 23 with a widening part towards end 24 arranged closest to the second receiver 22. Another example is a riffled or a fluted surface of the shaft member 23 and/or on an inner sleeve surface, which will lock the two sections together by a friction fit between the surface of the shaft member and the inner sleeve surface. Another example of locking arrangement is a shaft member 23 having at least two different diameters and a sleeve member 13 having a corresponding key-hole fit to the shaft member 23. In yet another embodiment the shaft member 23 has a splined surface, and the inner wall of the sleeve member 13 has a corresponding splined surface for engaging fit.

The illustrated embodiment further has a keyed feature, shown in the form of a protrusion 25, arranged on the shaft member 23 opposite the second receiver 22. A corresponding slot or recess 15 is formed in the sleeve member 13 on the first base 11 enabling insertion of the shaft member 23 with the protrusion 25 into the sleeve member 13, wherein the protrusion 25 passes in the recess 15 during insertion. The recess 15 extends along the length of the sleeve member 13 such that an inner diameter of the sleeve member 13 is resilient. When the shaft member 23 has been fully inserted into the sleeve member 13 and the protrusion 25 has passed through the recess 15 and out on an opposite side of the sleeve member 13, the first and second sections 10, 20 are rotatable connected, and the shaft member 23 may be rotated within the sleeve member 13.

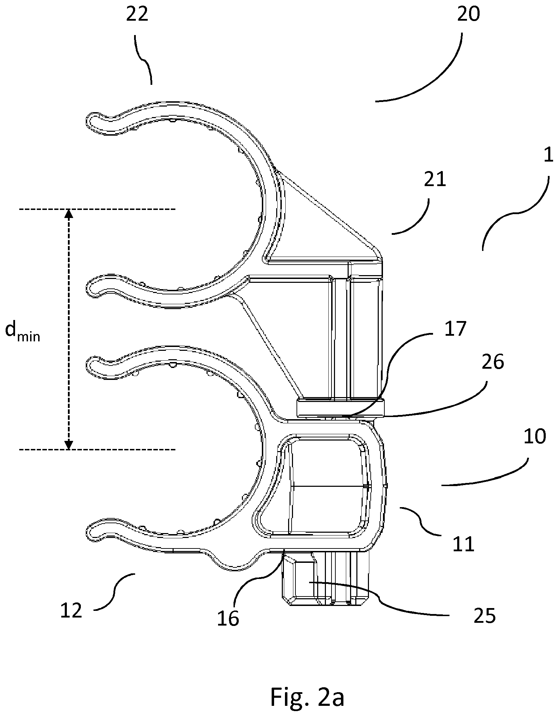

By rotating the first and/or the second section, the protrusion 25 is turned away from the recess 15 to engage with an outer wall 16 on the opposite side of the sleeve member 13, which will lock the first section 10 to the second section 20. Depending on the rotation degree, the clamp device will provide a clamping and locking of two elongated items in a parallel or an angulated interlocked position, such as is shown in Figs. 2a, 2b, 2c, 3a, 3b, 6a, 6b, 7a and 7b. In order to facilitate locking, the outer wall 16 can be chamfered on opposite sides of the recess 15 so as to allow the protrusion 25 to ride up along a slope on the sidewall 16 during rotation away from the recess 15, thereby pulling the two sections 10, 20 into closer engagement with one another.

In one embodiment, one or more recesses are arranged on the outer wall 16 for snap fit with an adjacent surface of the protrusion 25 (not shown). The recesses correspond to predetermined angulated interlocking position between the first and the second sections 10, 20.

In another embodiment, one or more recesses are arranged on the front surface 17 of the first section 10, and a protrusion to engage therewith are arranged on the seat surface 26 on the second section 20 (not shown).

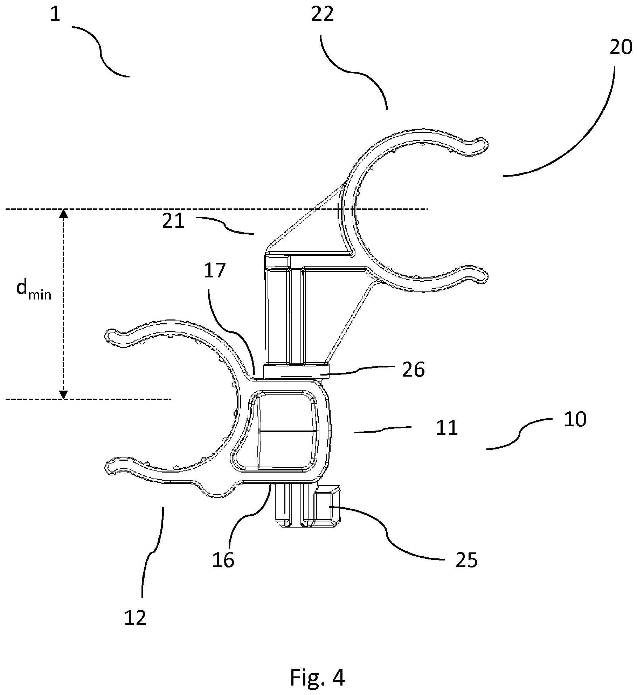

However, the first section 10 and the second section 20 may also be locked to each other without rotation of the first and/or the second section 10, 20. In one embodiment the protrusion 25 has a press fit with the recess 15 of the sleeve member 13 in such a way that the recess 15 provides a resilient fit around the protrusion 25 during insertion, and when the shaft member 23 has been fully inserted into the sleeve member 13 and the protrusion 25 has passed through the recess 15 and out on an opposite side of the sleeve member 13, the recess 15 may spring back and the protrusion 25 will engage with the outer wall edges 16 around the recess opening on the opposite side of the sleeve member 13. Such a coupling of the first and second section 10, 20 is shown in Fig. 4. The different disclosed locking arrangement may be combined with each other in different combinations.

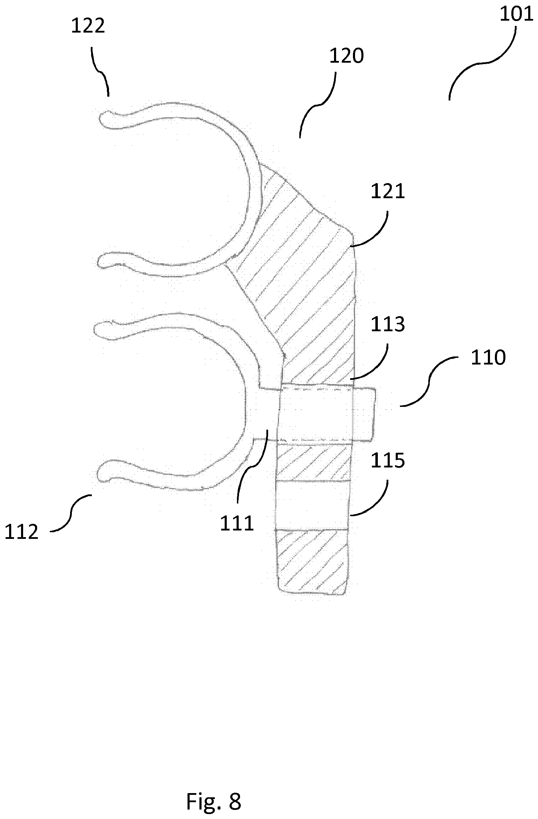

Fig. 8 illustrates another embodiment of a clamping device 101 that is configured to maintain two structures, such as two tubes/pipes, in a plurality of configurations. Clamping device 101 is similar to clamping device 1 shown in Figs. 1-7 and is configured to selectively maintain two structures in a plurality of angular orientations relative to one another, as well as at a plurality of distances from one another. As shown in Fig. 8, the clamping device 101 includes a first section 110, e.g. a first clamping member, having a first receiver 112 which is configured to receive and clamp a first pipe, and having a first base 111 for mating with a second section 120. The second section 120 has a second receiver 122 which is configured to receive and clamp a second pipe, and a second base 121 that mates with the first base 111. The first and second receivers 112, 122 are similar to the receivers 12, 22 described above and can thus have all of the same features described above.

In this embodiment, the first and second bases 111, 121 differ from the above embodiment. In particular, in this embodiment the second base 121 has an elongate configuration with at least one bore extending therethrough and forming a female mating component. As shown in Fig. 8, the second base 121 has two bores 113, 115 formed thereon. A person skilled in the art will appreciate that the second base 121 can have a single bore, or a plurality of bores, e.g., three bores, four bores, etc. Each bore can have a shape that is complementary to a shape of a male member on the first base 111, such as cylindrical, hexagonal, square, etc. The bores can be spaced along a longitudinal axis of the second base 121, and the distance between the bores can be configured to provide a desired preselected distance between the first and second receivers 112, 122. Each bore can also include a locking feature, e.g., such as a taper for frictionally engaging a male member on the first base 111, or any other locking feature as described herein or known in the art.

As indicated above, the first base 111 can be in the form of a male member, e.g., a shaft, that is configured to be inserted into the bore in the second base 121. The first base 111 can have a length that allows the first base 111 to pass at least partially into one of the bores in the second base 121, and more preferably that allows the first base 111 to pass entirely through one of the bores in the second base 121, as shown in Fig. 8.

When passed fully through the bore, a locking feature can help retain the first and second bases 111, 121 in mating engagement with one another. The locking feature can have various configurations, as previously disclosed herein. For example, the bore 113, 115 in the second base 121 can include a slot extending therethrough for receiving a protrusion formed on the first base 111. Once passed through the slot, the first base 111 can be rotated, thereby rotating the protrusion so as to allow the protrusion to engage an outer wall of the second base 121 to lock the components together.

In another embodiment, the locking feature can provide a snap-fit between the first and second bases 111, 121. For example, the first base 111 can be in the form of a split shaft having radially extending flanges formed on a terminal end thereof. The split configuration of the shaft will allow the flanges to be compressed toward one during insertion through the bore in the second base 121, and to expand once fully passed through the bore to thereby engage the outer sidewall of the second base 121 so as to prevent removal of the first base 111 from the second base 121. The first base 111 can remain freely rotatable, or a friction fit can help prevent free rotation.

Other locking features include, for example, threads formed on the first base 111 for mating with a threaded nut or other threaded locking element.

In other embodiments, the first base 111 can be in the form of a spline shaft, having ridges or teeth that mesh with corresponding grooves formed in the bore in the second base 121. The number of ridges or teeth and grooves can correspond to a desired number of rotational positions that the first section 110 can mate to the second section 120. When mated, the first base 111 will be prevented from rotating relative to the second base 121.

In use, clamping device 101 provides rotational adjustment between the first base 111 and the second base 121, thereby allowing the first receiver 112 to be position at any angle as may be desired relative to the second receiver 121. Such a configuration allows a single clamping device to be used to clamp two structures extending at any angle relative to one another. The clamping device 101 also allows for use with two structures positioned at various distances from one another. The first base 111 can be selectively inserted into a desired hole 113, 115 in the second base 121 so as to define a distance between the receivers 112, 122. In the illustrated embodiment, when mated to the first hole 113 the receivers will be positioned at a minimum distance, whereas the first base 111 is mated to the second hole 115 the receivers will be positioned at a greater maximum distance. Again, a person skilled in the art will appreciate that the second base 121 can include any number of holes at any position to allow the receivers 112, 122 to be maintained at a plurality of distances from one another.A skilled person will appreciate that a number of modifications of the embodiments described herein are possible without departing from the scope of the invention, which is defined in the appended claims.

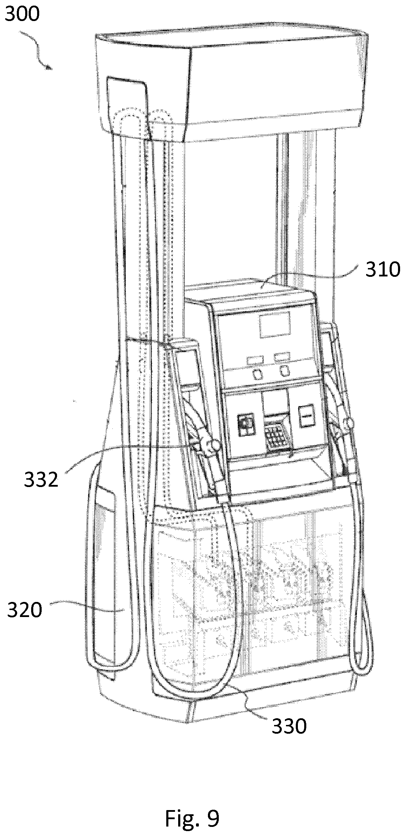

In use, in one embodiment one or more clamping devices can be coupled to tubes extending within a hydraulics compartment on a fuel dispenser so as to maintain the tubes at a fixed distance relative to one another. Fig. 9 illustrates one embodiment of a fuel dispenser 300 that can include at least one clamping device located in the hydraulics compartment. As shown, the illustrated fuel dispenser 300 generally includes an electronics module 310 that contains payment processing components, and a hydraulics module 320 that forms the base of the dispenser and that contains fuel dispensing components, such as pumps and meters, as well as various tubes/hoses for delivering the fuel. As further shown, the illustrated fuel dispenser 300 also includes a hose 330 having a nozzle 332 on a terminal end thereof for delivering fuel from the hydraulics compartment therethrough to a vehicle. A person skilled in the art will appreciate that the fuel dispenser can have virtually any configuration and should not be limited to the configuration shown in Fig. 9.

In one embodiment, one or more clamping devices as disclosed herein can be used, for example, in the hydraulics compartment 320 to maintain two tubes/hoses/pipes at a fixed position relative to one another. The modularity of the clamping device allows a single clamping device to connect to two tubes that extend parallel to one another or that extend non-parallel at various angular orientations relative to one another. The adjustability of the clamping device also allows the same clamping device to connect to tubes that are spaced apart at varying distances from one another.

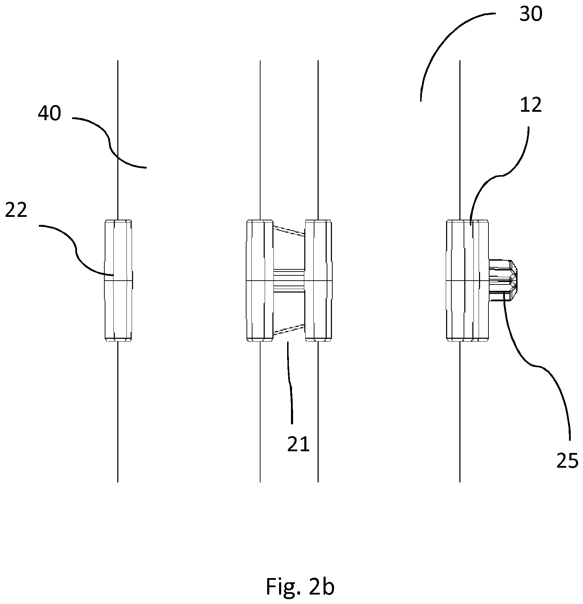

For example, the first section 10 and second section 20 of a clamping device can be mated as shown in Fig. 2a such that the receivers are aligned and the distance between the receivers is at a minimum distance. In such a configuration, the clamping device will maintain the two parallel tubes at a fixed minimum distance relative to one another, as shown in Fig. 2b.

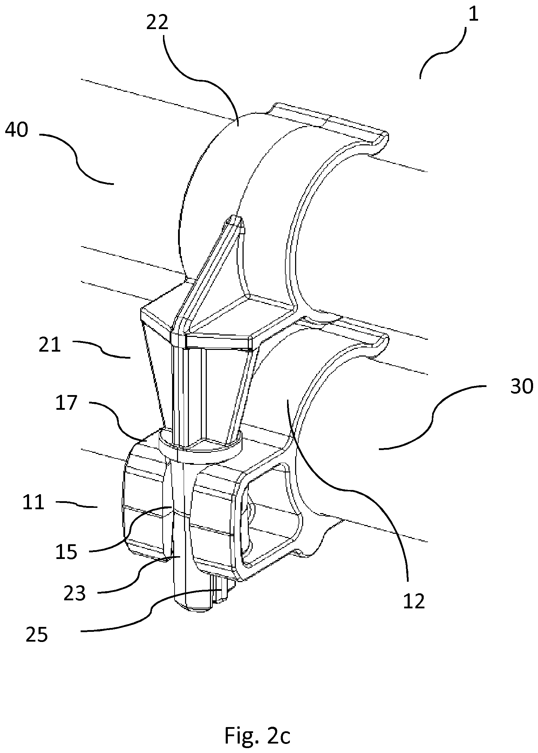

A second clamping device can be provided and the first and second sections 10, 20 can be mated to one another in a second configuration in which the receivers are likewise aligned, however the distance between the receivers is at a maximum distance. The second clamping device can maintain two parallel tubes at a fixed maximum distance relative to one another as shown in Fig. 2c.

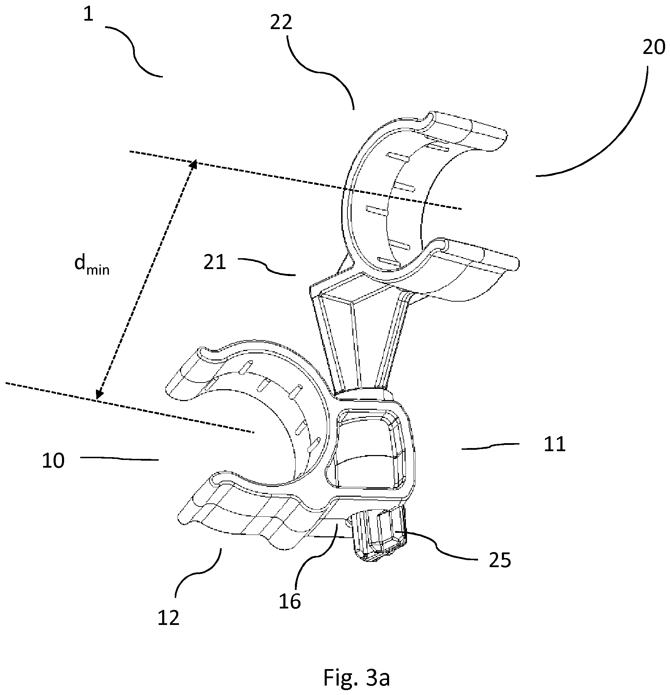

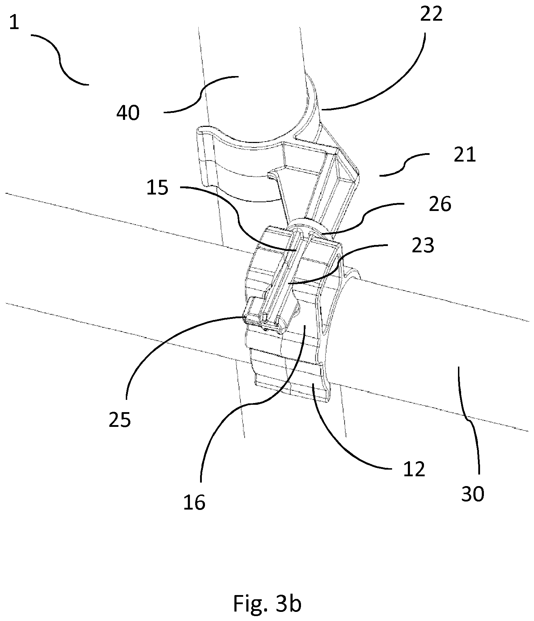

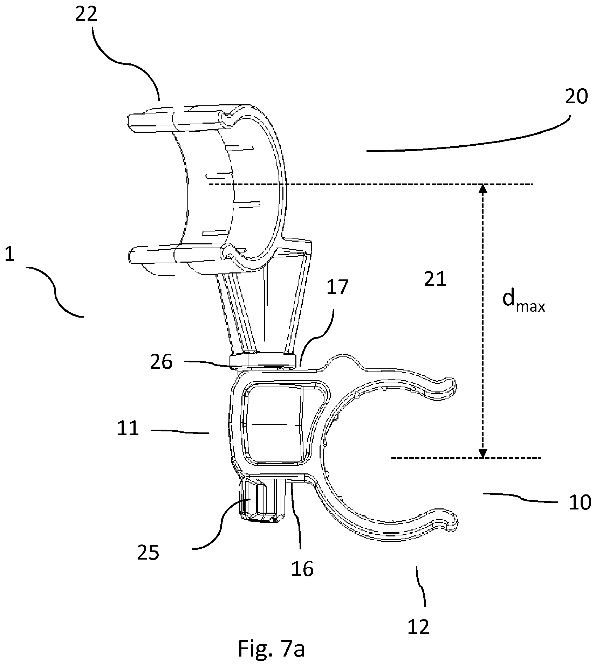

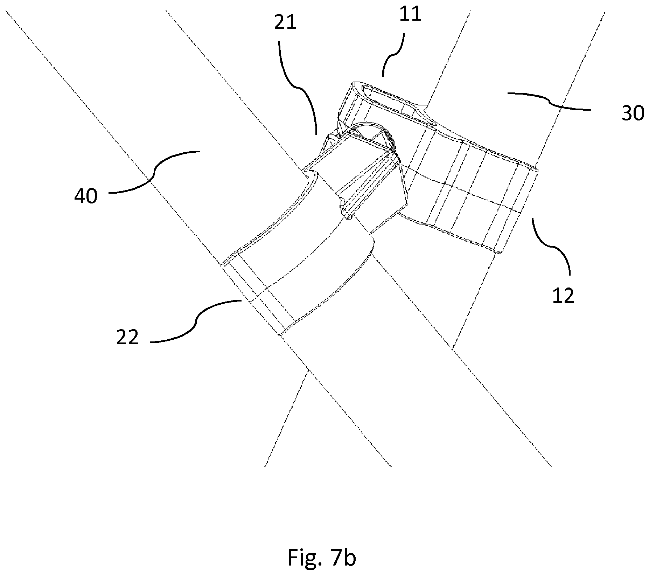

Additional clamping devices can also be coupled to tubes that extend in a nonparallel orientation relative to one another. For example, Figs. 3a-3b illustrate a configuration of a clamping device for maintaining two non-parallel tubes 30, 40 at a minimum distance relative to one another, while Figs. 7a-7b illustrate a configuration of a clamping device for maintaining two nonparallel tubes 30, 40 at a maximum distance relative to one another. Any number of clamping devices can be used in a fuel dispenser as needed.

A person skilled in the art will appreciate that the clamping devices disclosed herein can also be used in a variety of other applications, and are not limited to use in a fuel dispenser.

## Claims

1. A clamp device (1) comprising:
a first section (10) having a first base (11) and at least one receiver (12) configured to receive and clamp at least a first elongate component (30), the first base (11) including a sleeve member (13) and a recess (15) formed in the sleeve member (13); and
a second section (20) having a second base (21) and at least one receiver (22) configured to receive and clamp at least a second elongated component (40), the second base (21) including a shaft member (23) and a protrusion (25) arranged on the shaft member (23), the shaft member (23) being insertable into said sleeve member (13) with the protrusion (25) passing through the recess (15) during insertion;
wherein said sleeve member (13) and said shaft member (23) of said first and said second bases (11, 21) are coupling structures configured to allow said first section (10) and said second section (20) to be rotatably assembled to one another holding said first and said second elongated components (30, 40) in an interlocked position by rotating either said first section (10) and/or said second section (20) such that said protrusion (25) is turned away from said recess (15) to engage with an outer wall (16) on an opposite side of said sleeve member (13).

2. A clamp device (1) according to claim 1, wherein the coupling structures (13, 23) of said first and second bases are configured to rotatably assemble to one another to allow rotation of first and second elongated components (30, 40) within parallel planes of motion.

3. A clamp device (1) according to claim 1 or claim 2, wherein at least one of said first and second section (10, 20) is configured to provide at least two different distances (dₘᵢₙ, dₘₐₓ) between said first and said second elongate components (30, 40) in said interlocked position.

4. A clamp device (1) according to anyone of the preceding claims, wherein said receivers (12, 22) have a C-shaped configuration to receive and clamp said at least first and second elongated components (30, 40).

5. A clamp device (1) according to anyone of the preceding claims, wherein said first base (11) has said sleeve member (13) arranged axially perpendicular from said first receiver (12) and off center from said first receiver (12), thereby providing two different distances (dₘᵢₙ, dₘₐₓ) between said first receiver (12) and said second receiver (22) when said first base (11) is assembled to said second base (21) in the two different assembling possibilities for said first and said second section (10, 20) .

6. A clamp device (1) according to anyone of the preceding claims, wherein said second base (21) has said shaft member (23) arranged axially perpendicular from said second receiver (22).

7. A clamp device (1) according to anyone of the preceding claims, wherein said first and said second base (11, 21) has a locking arrangement (13, 23; 13, 23, 24; 13, 15, 16, 23, 25; 13, 15, 16, 23, 24, 25) for locking said first and second section (10, 20) together after assembling.

8. A clamp device (1) according to claim 7, wherein said locking arrangement comprises a friction based locking arrangement (13, 23; 13, 23, 24).

9. A clamp device (1) according to claim 7 or claim 8, wherein said locking arrangement (13, 23, 24; 13, 15, 16, 23, 24, 25) comprises a conical shaped shaft member (24) on said second base (21) for inserting in said sleeve member (13) on said first base (11).

10. A fuel dispenser (300), comprising:
a hydraulics compartment (320) having fuel dispensing components extending therethrough, the hydraulics compartment (320) having at least two tubes extending therethrough, and the hydraulics compartment (320) having a clamping device according to anyone of the preceding claims disposed therein, wherein a first portion (10;110) of the clamping device (1; 101) is coupled to the first tube (30) and a second portion (20; 120) of the clamping device (1; 101) is coupled to the second tube (40).

## Patentansprüche

1. Einspannvorrichtung (1), Folgendes umfassend:
einen ersten Abschnitt (10), der eine erste Basis (11) und mindestens eine Aufnahme (12), die dazu ausgelegt ist, mindestens eine erste längliche Komponente (30) aufzunehmen und einzuspannen, aufweist, wobei die erste Basis (11) ein Manschettenelement (13) und eine im Manschettenelement (13) ausgebildete Aussparung (15) umfasst; und
einen zweiten Abschnitt (20), der eine zweite Basis (21) und mindestens eine Aufnahme (22), die dazu ausgelegt ist, mindestens eine zweite längliche Komponente (40) aufzunehmen und einzuspannen, aufweist, wobei die zweite Basis (21) ein Schaftelement (23) und einen am Schaftelement (23) angeordneten Vorsprung (25) umfasst, wobei das Schaftelement (23) in das Manschettenelement (13) einsetzbar ist, wobei der Vorsprung (25) beim Einsetzen durch die Aussparung (15) verläuft;
wobei das Manschettenelement (13) und das Schaftelement (23) der ersten und zweiten Basis (11, 21) Kupplungsstrukturen sind, die dazu ausgelegt sind, zuzulassen, dass der erste Abschnitt (10) und der zweite Abschnitt (20) drehbar aneinander montiert werden und die erste und zweite längliche Komponente (30, 40) in einer Verriegelungsstellung halten, indem entweder der erste Abschnitt (10) und/oder der zweite Abschnitt (20) derart gedreht wird, dass der Vorsprung (25) von der Aussparung (15) weggedreht wird, um auf einer entgegengesetzten Seite des Manschettenelements (13) in eine Außenwand (16) einzugreifen.

2. Einspannvorrichtung (1) nach Anspruch 1, wobei die Kupplungsstrukturen (13, 23) der ersten und zweiten Basis dazu ausgelegt sind, drehbar aneinander montiert zu werden, um die Drehung der ersten und zweiten länglichen Komponente (30, 40) innerhalb paralleler Bewegungsebenen zuzulassen.

3. Einspannvorrichtung (1) nach Anspruch 1 oder Anspruch 2, wobei der erste und/oder zweite Abschnitt (10, 20) dazu ausgelegt ist, in der Verriegelungsstellung mindestens zwei verschiedene Abstände (dₘᵢₙ, dₘₐₓ) zwischen der ersten und zweiten länglichen Komponente (30, 40) vorzusehen.

4. Einspannvorrichtung (1) nach einem der vorstehenden Ansprüche, wobei die Aufnahmen (12, 22) eine C-förmige Konfiguration aufweisen, um mindestens die erste und zweite längliche Komponente (30, 40) einzuspannen.

5. Einspannvorrichtung (1) nach einem der vorstehenden Ansprüche, wobei das Manschettenelement (13) an der ersten Basis (11) axial senkrecht zur ersten Aufnahme (12) und zur ersten Aufnahme (12) außermittig angeordnet ist, wodurch zwei verschiedene Abstände (dₘᵢₙ, dₘₐₓ) zwischen der ersten Aufnahme (12) und der zweiten Aufnahme (22) vorgesehen werden, wenn die erste Basis (11) in den zwei verschiedenen Montagemöglichkeiten für den ersten und zweiten Abschnitt (10, 20) in die zweite Basis (21) montiert wird.

6. Einspannvorrichtung (1) nach einem der vorstehenden Ansprüche, wobei das Schaftelement (23) an der zweiten Basis (21) axial senkrecht zur zweiten Aufnahme (22) angeordnet ist.

7. Einspannvorrichtung (1) nach einem der vorstehenden Ansprüche, wobei die erste und zweite Basis (11, 21) eine Verriegelungsanordnung (13, 23; 13, 23, 24; 13, 15, 16, 23, 25; 13, 15, 16, 23, 24, 25) zum aneinander Verriegeln des ersten und zweiten Abschnitts (10, 20) nach der Montage aufweist.

8. Einspannvorrichtung (1) nach Anspruch 7, wobei die Verriegelungsanordnung eine reibungsbasierte Verriegelungsanordnung (13, 23; 13, 23, 24) umfasst.

9. Einspannvorrichtung (1) nach Anspruch 7 oder Anspruch 8, wobei die Verriegelungsanordnung (13, 23, 24; 13, 15, 16, 23, 24, 25) ein konisches Schaftelement (24) auf der zweiten Basis (21) zum Einsetzen in ein Manschettenelement (13) auf der ersten Basis (11) umfasst.

10. Kraftstoffspender (300), Folgendes umfassend:
ein Hydraulikfach (320), das sich dort hindurch erstreckende Kraftstoffspenderkomponenten aufweist, wobei das Hydraulikfach (320) mindestens zwei sich dort hindurch erstreckende Schläuche aufweist und eine Einspannvorrichtung nach einem der vorstehenden Ansprüche im Hydraulikfach (320) angeordnet ist, wobei ein erster Abschnitt (10; 110) der Einspannvorrichtung (1; 101) mit dem ersten Schlauch (30) gekoppelt ist und ein zweiter Abschnitt (20; 120) der Einspannvorrichtung (1; 101) mit dem zweiten Schlauch (40) gekoppelt ist.

## Revendications

1. Dispositif de serrage (1), comprenant :
une première section (10) ayant une première base (11) et au moins un récepteur (12) configuré pour recevoir et serrer au moins un premier composant allongé (30), la première base (11) comportant un organe de manchon (13) et un renfoncement (15) formé dans l'organe de manchon (13) ; et
une deuxième section (20) ayant une deuxième base (21) et au moins un récepteur (22) configuré pour recevoir et serrer au moins un deuxième composant allongé (40), la deuxième base (21) comportant un organe de tige (23) et une saillie (25) prévue sur l'organe de tige (23), l'organe de tige (23) pouvant être inséré dans ledit organe de manchon (13), la saillie (25) passant à travers le renfoncement (15) au cours de l'insertion ;
ledit organe de manchon (13) et ledit organe de tige (23) desdites première et deuxième bases (11, 21) étant des structures d'accouplement configurées pour permettre à ladite première section (10) et à ladite deuxième section (20) d'être assemblées de manière rotative l'une à l'autre en retenant lesdits premier et deuxième composants allongés (30, 40) dans une position emboîtée en faisant tourner soit ladite première section (10) soit ladite deuxième section (20), soit les deux, de telle sorte que ladite saillie (25) soit tournée à l'écart dudit renfoncement (15) pour venir en prise avec une paroi extérieure (16) sur un côté opposé dudit organe de manchon (13).

2. Dispositif de serrage (1) selon la revendication 1, dans lequel les structures d'accouplement (13, 23) desdites première et deuxième bases sont configurées pour s'assembler l'une à l'autre de manière rotative pour permettre la rotation des premier et deuxième composants allongés (30, 40) à l'intérieur de plans de déplacement parallèles.

3. Dispositif de serrage (1) selon la revendication 1 ou la revendication 2, dans lequel au moins l'une desdites première et deuxième sections (10, 20) est configurée pour fournir au moins deux distances différentes (dₘᵢₙ, dₘₐₓ) entre lesdits premier et deuxième composants allongés (30, 40) dans ladite position emboîtée.

4. Dispositif de serrage (1) selon l'une quelconque des revendications précédentes, dans lequel lesdits récepteurs (12, 22) présentent une configuration en forme de C pour recevoir et serrer au moins lesdits premier et deuxième composants allongés (30, 40).

5. Dispositif de serrage (1) selon l'une quelconque des revendications précédentes, dans lequel ladite première base (11) présente ledit organe de manchon (13) disposé axialement perpendiculairement audit premier récepteur (12) de manière décalée par rapport audit premier récepteur (12), pour ainsi fournir deux distances différentes (dₘᵢₙ, dₘₐₓ) entre ledit premier récepteur (12) et ledit deuxième récepteur (22) lorsque ladite première base (11) est assemblée à ladite deuxième base (21) dans les deux possibilités d'assemblage différentes pour lesdites première et deuxième sections (10, 20).

6. Dispositif de serrage (1) selon l'une quelconque des revendications précédentes, dans lequel ladite deuxième base (21) présente ledit organe de tige (23) disposé axialement perpendiculairement audit deuxième récepteur (22).

7. Dispositif de serrage (1) selon l'une quelconque des revendications précédentes, dans lequel lesdites première et deuxième bases (11, 21) présentent un agencement de verrouillage (13, 23 ; 13, 23, 24 ; 13, 15, 16, 23, 25 ; 13, 15, 16, 23, 24, 25) pour verrouiller lesdites première et deuxième sections (10, 20) ensemble après l'assemblage.

8. Dispositif de serrage (1) selon la revendication 7, dans lequel ledit agencement de verrouillage comprend un agencement de verrouillage à base de friction (13, 23 ; 13, 23, 24).

9. Dispositif de serrage (1) selon la revendication 7 ou la revendication 8, dans lequel ledit agencement de verrouillage (13, 23, 24 ; 13, 15, 16, 23, 24, 25) comprend un organe de tige de forme conique (24) sur ladite deuxième base (21), prévu pour être inséré dans ledit organe de manchon (13) sur ladite première base (11).

10. Distributeur de carburant (300), comprenant :
un compartiment hydraulique (320) ayant des composants de distribution de carburant s'étendant à travers lui, le compartiment hydraulique (320) ayant moins deux tubes s'étendant à travers lui, et le compartiment hydraulique (320) ayant un dispositif de serrage selon l'une quelconque des revendications précédentes disposé en son sein, une première portion (10 ; 110) du dispositif de serrage (1 ; 101) étant accouplée au premier tube (30) et une deuxième portion (20 ; 120) du dispositif de serrage (1 ; 101) étant accouplée au deuxième tube (40) .
